# EUROPEAN PATENT APPLICATION

(11) **EP 4 656 423 A1**
(43) Date of publication of application: **03.12.2025**
(21) Application number: 24778952.2
(22) Date of filing: 27.02.2024
(51) Int. Cl.: B60K 1/00, B60L 15/20, B60L 50/60, B60L 58/26, B60L 58/27, B60P 1/16

(54) **TEMPERATURE MANAGEMENT DEVICE AND DUMP TRUCK**

(30) Priority: 29.03.2023 JP 2023053624
(71) Applicant: Hitachi Construction Machinery Co., Ltd., Tokyo 110-0015 (JP)
(72) Inventor: NAKATE Youhei, Tsuchiura-shi, Ibaraki 300-0013 (JP)
(74) Representative: Manitz Finsterwald Patent- und Rechtsanwaltspartnerschaft mbB
(86) International application number: PCT/JP2024/006930
(87) International publication number: WO 2024/202810

(57) **Abstract**

The object of the present invention is to provide a temperature management device that enables stable cooling of an electric motor. The temperature management device of the present invention is a temperature management device 10 for electric working machines, which includes an electric motor 120 having a predetermined first management temperature range, a power supply device 110 that supplies power to the electric motor and has a second management temperature range within the first management temperature range, a hydraulic pump 122 driven by the electric motor to pressurize the hydraulic fluid to a predetermined pressure, and a working device driven at a predetermined pressure by receiving the supply of hydraulic fluid pressurized by the hydraulic pump. Furthermore, the temperature management device includes a pump for pressurizing a heat exchange liquid, a liquid pipe 16 in which a power source, electric motor, and pump are arranged and the liquid circulates, a heat exchanger 90 that exchanges heat with the liquid that has exchanged heat with the power source and electric motor, and a temperature control unit 56 that controls the heat exchanger to maintain the temperature of the liquid within the second management temperature range.

## Description

### Technical Field

The present invention relates to a temperature management device and a dump truck equipped with the same.

### Background Art

Conventionally, electric dump trucks that drive a generator with an engine and supply the generated power to a motor to drive the rear wheels are known (for example, Patent Literature 1).

In an electric dump truck equipped with an engine, the rotor of the generator is connected to the crankshaft of the engine, and the rotor is rotated by the engine power. The power generated by the rotation of the rotor is supplied to the electric motor, and the rear wheels of the dump truck are driven by the power generated by the electric motor.

Furthermore, such electric dump trucks use hydraulic power for operations such as raising and lowering the body, steering, and braking. The hydraulic pump that generates this hydraulic pressure is usually driven by the engine power. For example, the rotation shaft of the hydraulic pump is connected to the end of the crankshaft opposite to the rotor of the generator, and the hydraulic pump is also driven by the engine power. This generates hydraulic pressure for the hydraulic cylinders used in braking, steering, and raising and lowering the body.

### Citation List

### Patent Literature

Patent Literature 1: JP 2016-78714 A

### Summary of Invention

### Technical Problem

Meanwhile, electric dump trucks without engines are equipped with many electrical devices. For example, electric dump trucks are equipped with an electric motor for driving the hydraulic pump. The power to drive this electric motor is supplied from batteries or trolley wires.

Among the hydraulic pressures required for driving an electric dump truck, the hydraulic pressure for brakes and steering is almost always necessary. The power to generate this hydraulic pressure with a hydraulic pump is always generated by the electric motor for the hydraulic pump.

On the other hand, in an electric dump truck, during a series of cycles such as loading, unloading, and then loading again, if one cycle takes 30 minutes, the time required for raising the body in this cycle is approximately 30 seconds. The hydraulic pressure required for raising the body is different from the hydraulic pressure required for brakes and steering, as it is used less frequently and is not always necessary. However, the hydraulic pressure required for raising the body is 3 to 5 times higher than that required for steering and brakes.

Therefore, if the capacity of the electric motor for the hydraulic pump is matched to the hydraulic pressure required for raising the body, the size of the electric motor becomes very large. As a result, the space for mounting on the vehicle body is constrained, and the weight of the electric motor also increases, reducing the payload that the electric dump truck can carry.

In contrast, if the capacity of the electric motor is adjusted to match the hydraulic pressure required for steering and braking, an electric motor with a smaller capacity than that used for raising the body will be installed. To generate the hydraulic pressure for raising the body with such a small capacity electric motor, it is necessary to supply a corresponding current to the electric motor. In this case, strong cooling performance that matches the heat generation of the electric motor during body raising is required. Thus, in work machines equipped with multiple electrical devices, it is required to balance miniaturization of the devices and stable cooling performance according to the constantly changing work conditions.

The present invention has been made in view of the above problems, and its purpose is to provide a temperature management device and a dump truck that enable stable cooling of electrical devices while achieving miniaturization.

### Solution to Problem

To achieve the above purpose, the temperature management device according to the present invention consists of the following. The temperature management device has a battery and is mounted on an electric work machine that operates using the battery as a power source, managing the temperature of multiple electrical devices including the battery. Furthermore, the temperature management device includes a pump for pressurizing the liquid for heat exchange, a liquid pipe through which the liquid pressurized by the pump circulates, a heat exchanger where the refrigerant for heat exchange circulates and exchanges heat with the liquid, a temperature sensor that detects the temperature of the liquid, and a control device that controls the heat exchanger based on the temperature of the liquid detected by the temperature sensor. The liquid pipe includes a first pipe connected to a first electrical device among the multiple electrical devices, a second pipe connected to a second electrical device among the multiple electrical devices, and a third pipe that supplies the liquid to the first and second pipes. The control device stores a first management temperature range preset as the temperature for operating the first electrical device, and a second management temperature range preset as a narrower range than the first management temperature range for operating the second electrical device. Furthermore, if the temperature of the liquid detected by the temperature sensor exceeds the upper limit of the second management temperature range, the control device controls the heat exchanger to lower the temperature of the liquid to within the second management temperature range.

### Advantageous Effects of Invention

According to the present invention, it is possible to provide a temperature management device and a dump truck that enable stable cooling of electrical devices while achieving miniaturization.

### Brief Description of Drawings

[FIG. 1] Perspective view of a dump truck.
[FIG. 2] System configuration diagram schematically showing the drive system of a dump truck.
[FIG. 3] Configuration diagram schematically showing the temperature management device according to the first embodiment.
[FIG. 4] Configuration diagram schematically showing the temperature management device according to the second embodiment.
[FIG. 5] Configuration diagram schematically showing the temperature management device according to the third embodiment.
[FIG. 6] Configuration diagram schematically showing the temperature management device according to the fourth embodiment.
[FIG. 7] Configuration diagram schematically showing the temperature management device according to the fifth embodiment.

### Description of Embodiments

### <First Embodiment>

Below, the first embodiment of the present invention will be described with reference to the drawings.

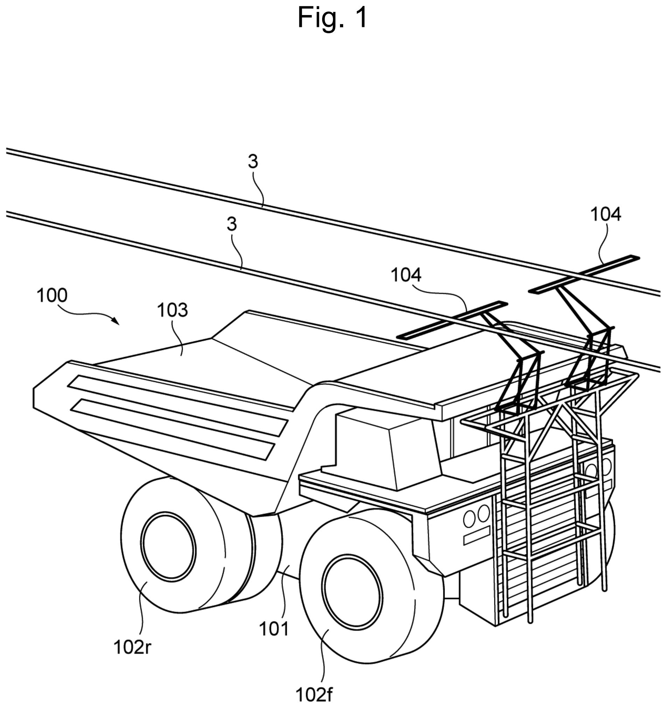

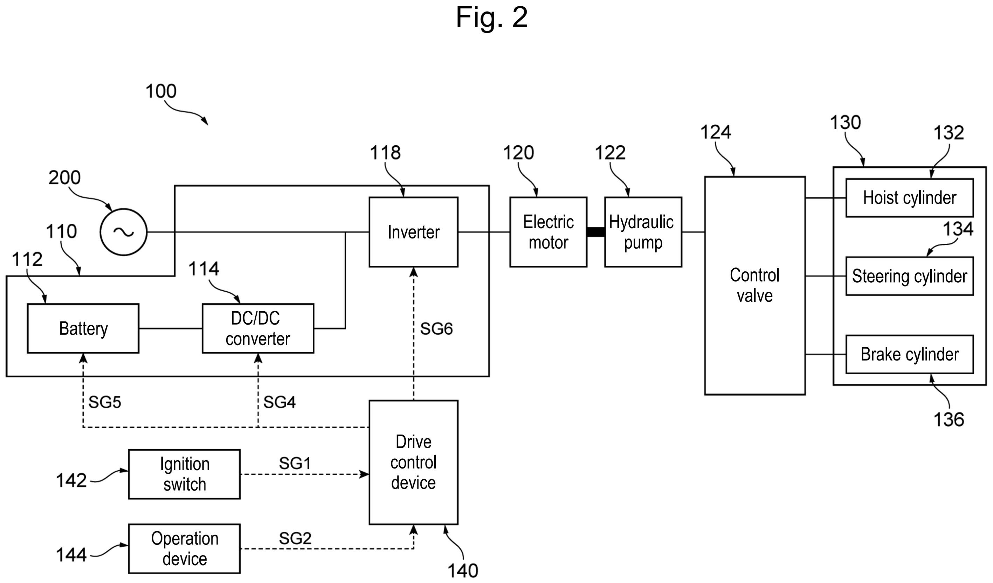

FIG. 1 is a perspective view of the dump truck 100. Also, FIG. 2 is a system configuration diagram schematically showing the drive system of the dump truck 100. The dump truck 100 is an electric mining dump truck for transporting resources mined in a mine to a predetermined place. The dump truck 100 travels by driving the rear wheels 102r (wheels) using a travel electric motor (not shown). Additionally, the dump truck 100 includes a power supply device 110 containing a battery 112 (storage device), and performs travel and work using the power stored in the battery 112 as a power source.

As shown in FIG. 1, the dump truck 100 has a vehicle body frame 101, front wheels 102f (wheels) and rear wheels 102r (wheels) installed on the vehicle body frame 101. Furthermore, the dump truck 100 is equipped with a body 103 (work device) for loading transported materials such as earth and sand on the vehicle body frame 101, and has a structure for raising and lowering the body 103 with a hoist cylinder 132. The vehicle body frame 101 is equipped with front wheels 102f (wheels), rear wheels 102r (wheels), a hydraulic fluid tank, a fuel tank, etc., through predetermined mechanical components.

The dump truck 100 includes an electric motor 120 for the hydraulic pump, a power supply device 110 that supplies power to the electric motor 120 for the hydraulic pump, a hydraulic pump 122 driven by the electric motor 120 for the hydraulic pump, and an actuator 130 that is driven at a predetermined pressure by receiving the supply of hydraulic fluid pressurized by the hydraulic pump 122. The dump truck 100 drives the actuator 130 based on the power supplied from the power supply device 110. The electric motor 120 for the hydraulic pump and the power supply device 110 of the dump truck 100 constitute multiple electrical devices in claim 1 of the claims.

As shown in FIG. 2, the power supply device 110 includes a battery 112, a DC/DC converter (auxiliary device) 114, and an inverter (auxiliary device) 118.

The battery 112 is a secondary battery, such as a lithium-ion battery, that charges power supplied from external power equipment 200 described later and discharges to the inverter 118. The temperature management device 10 described later is pre-set with a second management temperature range (for example, between 15°C and 40°C), which is an operating temperature suitable for the use of the battery 112. The battery 112 is managed by the temperature management device 10 described later so that the operating temperature is approximately 25°C within the second management temperature range.

The second management temperature range is set to be narrower than the first management temperature range so that it falls within the first management temperature range of the electric motor 120 for the hydraulic pump described later. The battery 112 has a built-in relay (not shown), which is turned ON/OFF according to the presence or absence of the second power supply availability signal SG5 output from the drive control device 140.

The external power equipment 200 is, for example, trolley wires 3 (see FIG. 1) that supply power to the dump truck 100 from a commercial power distribution network owned by a power company, or transportable large-capacity storage devices. The external power equipment 200 supplies power to the battery 112 and the inverter 118. The dump truck 100 has a pantograph 104 that receives power supply from external sources. The pantograph 104 is attached on the upper part of the dump truck 100 and is configured to extend and retract vertically, for example, by the operation of the dump truck 100's operator. The pantograph 104 extends upward to contact the trolley wires 3 and receive power supply from the trolley wires 3.

The DC/DC converter 114 is a buck type, which steps down the high voltage (for example, several hundred volts) supplied from the external power supply equipment 200 to a voltage that can charge the battery 112, and outputs it to the battery 112. Additionally, the DC/DC converter 114 steps down the DC power output from the battery 112 to the rated voltage of the electric motor 120 for the hydraulic pump and outputs it to the inverter 118. The DC/DC converter 114 is equipped with a built-in relay (not shown), which is switched ON/OFF depending on the presence or absence of the first power supply availability signal SG4 output from the drive control device 140.

The inverter 118 converts the power supplied from the battery 112 or the external power supply equipment 200 and supplies the converted power to the electric motor 120 for the hydraulic pump. The inverter 118 has a built-in relay that is turned ON/OFF depending on the presence or absence of the third power supply signal SG6 output from the drive control device 140. The inverter 118 includes a function to convert the DC power output from the DC/DC converter 114 into AC power of a predetermined frequency and voltage, and a function to convert the AC power supplied from the external power supply equipment 200 into AC power of a predetermined frequency and voltage.

For example, when the AC power supplied from the external power supply equipment 200 is introduced into the inverter 118, the AC power is converted into DC power in the converter circuit (not shown), and the capacitor (not shown) stabilizes the DC power by repeatedly charging and discharging. Next, the inverter circuit (not shown) converts the DC power into AC power at any frequency and voltage, and this AC power is output to the electric motor 120 for the hydraulic pump.

As shown in FIG. 2, the electric motor 120 for the hydraulic pump is driven by the AC power supplied from the inverter 118. The electric motor 120 for the hydraulic pump serves as the driving source for the hydraulic pump 122 and is rotationally driven by applying three-phase AC power to the stator coil (not shown).

A first management temperature range (e.g., between 0°C and 90°C) is preset for the electric motor 120 for the hydraulic pump, which is the range of temperatures suitable for operation. The first management temperature range of the electric motor 120 for the hydraulic pump is wider than the second management temperature range of the battery 112 and includes the second management temperature range.

The electric motor 120 for the hydraulic pump is set to a rated capacity that matches the hydraulic pressure required for the steering cylinder 134 and the brake cylinder 136 for steering and braking operations. Therefore, The electric motor 120 for the hydraulic pump is set to a rated capacity lower than the capacity required for the hydraulic pressure needed to raise the body.

The electric motor 120 for the hydraulic pump is a so-called water-cooled motor, cooled by cooling water. The electric motor 120 for the hydraulic pump has an inner housing and an outer housing that accommodates the entire inner housing. The inner housing accommodates the rotor and the stator. The rotor is fixed to a rotating shaft rotatably supported by the inner housing, and the stator is arranged with a gap between it and the rotor. The stator has a stator coil wound around it, and a permanent magnet is embedded in the position of the rotor corresponding to the stator coil.

And, the outer housing is arranged with a predetermined gap between it and the inner housing. A water channel through which cooling water flows is formed in the gap between the outer housing and the inner housing. The water channel may be formed throughout the gap between the outer housing and the inner housing, or it may be formed in part of the gap. The heat generated from the electric motor 120 for the hydraulic pump is transferred to the cooling water in the water channel, and the cooling of the electric motor 120 for the hydraulic pump is performed.

The hydraulic pump 122 is a variable displacement pump driven by an electric motor 120 for the hydraulic pump. The hydraulic fluid pressurized to a predetermined hydraulic pressure by the hydraulic pump 122 is supplied to the actuator 130 via the control valve 124. The hydraulic fluid is distributed by the control valve 124 to hydraulic actuators such as the hoist cylinder 132, steering cylinder 134, and brake cylinder 136.

The actuator 130 includes a hoist cylinder 132, a steering cylinder 134, and a brake cylinder 136. The hoist cylinder 132 is a hydraulic actuator for raising and lowering the body 103, which is used to load transported materials such as earth and sand, relative to the vehicle body frame 101 of the dump truck 100. The steering cylinder 134 and brake cylinder 136 are hydraulic actuators for steering and braking the dump truck 100, respectively.

The ignition switch 142 is operated by the operator and is a switch for starting the dump truck 100. For example, by turning the key cylinder ON, the ignition signal SG1 is output to the drive control device 140.

The operation device 144 is operated by the operator and is an input means for performing steering, braking, and raising and lowering of the body 103 of the dump truck 100 at any speed, and the operation signal SG2 is output to the drive control device 140.

The drive control device 140 is, for example, a computing device that calculates the hydraulic pressure of the hydraulic fluid supplied to the actuator 130 based on the input of the ignition signal SG1 and the operation signal SG2. Then, based on the calculation result, a predetermined signal is output to the battery 112, DC/DC converter 114, and inverter 118. That is, in this embodiment, the dump truck 100 performs travel and work using the power stored in the battery 112 or the power supplied from the external power supply equipment 200 as a power source.

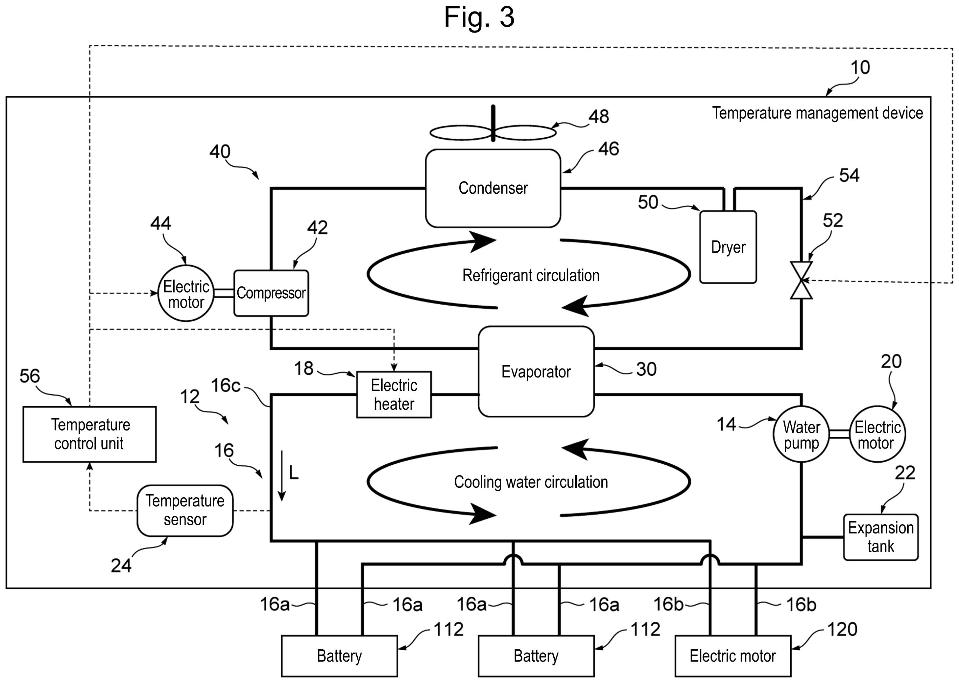

Next, the temperature management device 10 according to this embodiment will be described. Figure 3 is a schematic configuration diagram showing the temperature management device 10 according to the first embodiment.

The dump truck 100 is installed with a temperature management device 10 that manages the temperature of the power supply device 110 and the electric motor 120 for the hydraulic pump. The temperature management device 10 includes a liquid circulation device 12 that cools the electric motor 120 for the hydraulic pump by circulating cooling water, which is a liquid for heat exchange, and a heat exchanger 40 that performs heat exchange with the cooling water by circulating a refrigerant.

The liquid circulation device 12 includes a liquid pipe 16 that serves as a circulation path for the cooling water, a water pump (pump) 14 that circulates the cooling water (liquid) in the liquid pipe 16 by pressurizing, an electric heater (heating part) 18 that heats the cooling water flowing in the liquid pipe 16, and an expansion tank 22 that absorbs the volume fluctuation of the cooling water caused by temperature changes.

The liquid pipe 16 has a pipe path through which the cooling water pressurized by the water pump 14 circulates. The liquid pipe 16 includes a first pipe 16a connected to the battery 112, which is a first electrical device, a second pipe 16b connected to the electric motor 120 for the hydraulic pump, which is a second electrical device, and a third pipe 16c that supplies cooling water to the first pipe 16a and the second pipe 16b.

The first pipe 16a and the second pipe 16b branch from the third pipe 16c and are connected to the battery 112 and the electric motor 120 for the hydraulic pump, supplying cooling water to the battery 112 and the electric motor 120 for the hydraulic pump. The cooling water supplied to the battery 112 and the electric motor 120 for the hydraulic pump is collected in the heat exchanger 40 via the third pipe 16c. The liquid pipe 16 has the same pipe diameter in the first pipe 16a, the second pipe 16b, and the third pipe 16c.

The water pump 14 is driven by an electric motor 20 for the water pump and pressurizes the cooling water (liquid) for heat exchange stored in a water tank (not shown). The water pump 14 circulates the cooling water in the liquid pipe 16 as indicated by the flow direction L.

The heat exchanger 40 includes a refrigerant circuit 54 for circulating a refrigerant for heat exchange, an evaporator 30 for vaporizing the liquid refrigerant (refrigerant liquid), a compressor 42 for compressing the vaporized refrigerant into refrigerant vapor, a condenser 46 for condensing the refrigerant vapor into refrigerant liquid, a dryer 50 for removing moisture from the refrigerant liquid, and an expansion valve 52 for adjusting the pressure of the refrigerant liquid.

The evaporator 30 performs heat exchange between the refrigerant circulating in the refrigerant circuit 54 and the cooling water circulating in the liquid pipe 16. In the evaporator 30, the low-temperature refrigerant decompressed by the expansion valve 52 absorbs heat from the cooling water flowing through the third pipe 16c of the liquid pipe 16. As a result, the refrigerant liquid changes into refrigerant vapor.

The compressor 42 is driven by an electric motor 44 for the compressor. The compressor 42 is placed in the refrigerant circuit 54, and the refrigerant that has turned into vapor in the evaporator 30 is drawn up from the evaporator 30 and pressurized to the condenser 46. In the condenser 46, the high-temperature high-pressure refrigerant vapor compressed by the compressor 42 is cooled by the air supplied by the electric fan 48, and becomes refrigerant liquid by being condensed. This refrigerant liquid is sent to the expansion valve 52 after moisture is removed in the dryer 50.

The expansion valve 52 adjusts the pressure of the refrigerant liquid that has passed through the dryer 50. The expansion valve 52 is, as an example, an orifice valve. By passing the refrigerant liquid through this orifice valve, the pressure drops due to flow resistance, and the pressure of the refrigerant flowing to the evaporator 30 (evaporation pressure) is adjusted. In this way, the heat exchanger 40 uses the refrigerant circulating through the heat exchanger 40 to lower the temperature of the cooling water circulating through the liquid circulation device 12.

The temperature management device 10 further includes a temperature sensor 24 that detects the temperature of the cooling water, and a temperature control unit 56 that controls the heat exchanger 40 based on the temperature of the cooling water detected by the temperature sensor 24. The temperature control unit 56 is, for example, a control device with a CPU and memory, and controls the heat exchanger 40 by executing a software program stored in the memory.

The temperature control unit 56 maintains the temperature of the cooling water circulating through the liquid pipe 16 within the second management temperature range by controlling the heat exchanger 40. The information on the first control temperature range and the second control temperature range is stored in the memory of the temperature control unit 56.

When the cooling water temperature detected by the temperature sensor 24 exceeds the upper limit of the second management temperature range, the temperature control unit 56 lowers the cooling water temperature to within the second management temperature range by controlling the heat exchanger 40. As an example, the temperature control unit 56 increases the rotational speed of the electric motor 44 for the compressor and raises the temperature and pressure of the refrigerant supplied to the condenser 46. Additionally, the temperature control unit 56 adjusts the flow resistance in the expansion valve 52 and reduces the pressure of the refrigerant liquid supplied to the evaporator 30. As a result, the refrigerant liquid in a more easily evaporated state is supplied to the evaporator 30, and the cooling water temperature decreases.

If the cooling water temperature detected by the temperature sensor 24 falls below the lower limit of the second management temperature range, the temperature control unit 56 controls the electric heater 18 to raise the cooling water temperature to within the second management temperature range. The temperature control unit 56 increases the current supplied to the electric heater 18 and thereby increases the heat generation of the electric heater 18 to raise the cooling water temperature.

The temperature control unit 56 of the temperature management device 10 according to this embodiment can maintain the temperature of the cooling water circulating through the liquid pipe 16 within the second management temperature range by controlling the compressor 42 and the expansion valve 52 of the heat exchanger 40. Therefore, for example, even if the rated capacity of the electric motor 120 for the hydraulic pump is matched to the hydraulic pressure required by the steering cylinder 134 and the brake cylinder 136, the electric motor 120 for the hydraulic pump can be stably cooled.

As a result, for example, when raising the body 103 of the dump truck 100, even if the output of the electric motor 120 for the hydraulic pump temporarily exceeds the rated value, the temperature of the electric motor 120 for the hydraulic pump can be lowered. Therefore, the temperature of the electric motor 120 for the hydraulic pump is adjusted within the management temperature range of the battery 112 (second management temperature range), that is, within the management temperature range of the electric motor 120 (first management temperature range). And, even in the case of a short-term overload that raises and lowers the body 103, the electric motor 120 for the hydraulic pump can withstand it sufficiently and can prevent failures such as the burning out of motor coils beforehand.

In addition, since the electric motor 120 for the hydraulic pump mounted on the dump truck 100 can be miniaturized, the mounting space can be reduced, and furthermore, the payload carried by the dump truck 100 can be increased.

Furthermore, since the temperature control unit 56 maintains the cooling water temperature within the management temperature range of the battery 112, the temperature of the electric motor 120 for the hydraulic pump is inevitably maintained within its own management temperature range. For this reason, there is no need to prepare a dedicated temperature management device for cooling the electric motor 120 for the hydraulic pump. Therefore, the mounting space of the dump truck 100 can be secured more widely by that amount.

### <Second Embodiment>

Next, the temperature management device 10a according to the second embodiment will be described.

The temperature management device 10a according to the second embodiment differs from the temperature management device 10 according to the first embodiment in that an orifice 26 as a flow rate adjustment unit is attached. Hereinafter, configurations having the same or similar functions as the temperature management device 10 according to the first embodiment will be denoted by the same reference numerals and their descriptions will be omitted, and different parts will be described.

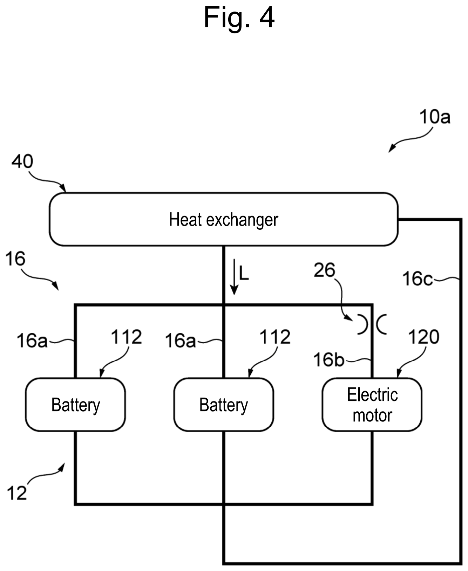

FIG. 4 is a schematic configuration diagram showing the temperature management device 10a according to the second embodiment. In FIG. 4, the descriptions of the water pump 14, electric heater 18, temperature control unit 56, temperature sensor 24, and expansion tank 22 in the liquid circulation device 12 are omitted.

As shown in Figure 4, in the liquid circulation device 12 of the temperature management device 10a according to this embodiment, the first pipe 16a and the second pipe 16b branch off midway along the flow path of the third pipe 16c and are arranged in parallel with each other. In addition, the liquid circulation device 12 includes an orifice 26 upstream of the electric motor 120 for the hydraulic pump in the second pipe 16b (upstream position in the cooling water flow direction L).

The orifice 26 serves as a flow rate adjustment unit that adjusts the amount of cooling water flowing through the second pipe 16b. The orifice 26 is a throttle that reduces the pipe diameter of the second pipe 16b and limits the flow rate of the cooling water flowing through the second pipe 16b. The orifice 26 may also be a throttle that varies the pipe diameter of the second pipe 16b, and can increase or decrease the flow rate of the cooling water flowing through the second pipe 16b.

By the orifice 26 in the temperature management device 10a according to the second embodiment, the flow rate of the cooling water flowing through the second pipe 16b can be made less than the flow rate of the cooling water flowing through the first pipe 16a. Therefore, for example, if the pressure loss of the cooling water in the electric motor 120 for the hydraulic pump is smaller than the pressure loss of the cooling water in the battery 112, the flow rate of the cooling water flowing through the second pipe 16b can be restricted, allowing an equal amount of cooling water to flow through the first pipe 16a and the second pipe 16b.

In this way, regardless of the presence of pressure loss in the electric motor 120 for the hydraulic pump, the electric motor 120 for the hydraulic pump is stably cooled, and the battery 112 can also be cooled. As a result, the operation of the electric motor 120 for the hydraulic pump and the battery 112 is stabilized, and failures of the electric motor 120 for the hydraulic pump and the battery 112 can be prevented.

### <Third Embodiment>

Next, the temperature management device 10b according to the third embodiment will be described.

The temperature management device 10b according to the third embodiment differs from the temperature management device 10 according to the first embodiment in the installation of the relief valve 28 and the arrangement of the first pipe 16a and the second pipe 16b in the middle of the path of the third pipe 16c. Hereinafter, configurations having the same or similar functions as the temperature management device 10 according to the first embodiment will be denoted by the same reference numerals and their descriptions will be omitted, and different parts will be described.

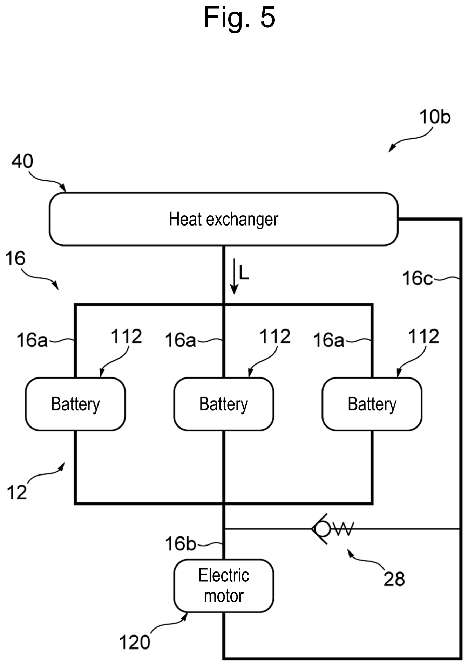

FIG. 5 is a schematic configuration diagram showing the temperature management device 10b according to the third embodiment. In FIG. 5, the descriptions of the water pump 14, electric heater 18, temperature control unit 56, temperature sensor 24, and expansion tank 22 in the liquid circulation device 12 are omitted.

As shown in FIG. 5, in the liquid circulation device 12 of the temperature management device 10b according to this embodiment, the first pipe 16a and the second pipe 16b are arranged in series in the order of the first pipe 16a to the second pipe 16b on the downstream side of the cooling water flow direction L of the third pipe 16c. The first pipe 16a branches into multiple paths in the middle of the flow path of the third pipe 16c and is arranged in parallel with each other. In the middle of the flow paths of these multiple first pipes 16a, batteries 112 are arranged. Then, the second pipe 16b is located in the middle of the flow path of the third pipe 16c and downstream of the multiple first pipes 16a.

In the liquid circulation device 12, a relief valve 28 is attached upstream of the electric motor 120 for the hydraulic pump (upstream position in the cooling water flow direction). The relief valve 28 is opened when the cooling water pressure in the second pipe 16b upstream of the electric motor 120 for the hydraulic pump exceeds a predetermined threshold. When the relief valve 28 is opened, the cooling water flowing through the second pipe 16b bypasses the electric motor 120 for the hydraulic pump and is supplied to the third pipe 16c.

According to the temperature management device 10b of the third embodiment, the flow rate of the cooling water that cools each battery 112 can be equalized, thereby stabilizing the operation of all the batteries 112.

Furthermore, when the relief valve 28 is opened, for example, even if the flow of cooling water stagnates due to a blockage in the waterway of the electric motor 120 for the hydraulic pump, and the pressure of the cooling water in the first pipe 16a increases, the rise in cooling water pressure above a predetermined value can be suppressed.

### <Fourth Embodiment>

Next, the temperature management device 10c according to the fourth embodiment will be described.

The temperature management device 10c according to the fourth embodiment differs from the temperature management device 10 according to the first embodiment in the installation of the on-off valve 62 and the cooling structure of the electric motor 120a for the hydraulic pump. Hereinafter, configurations having the same or similar functions as the temperature management device 10 according to the first embodiment are denoted by the same reference numerals, and their descriptions are omitted, while different parts are described.

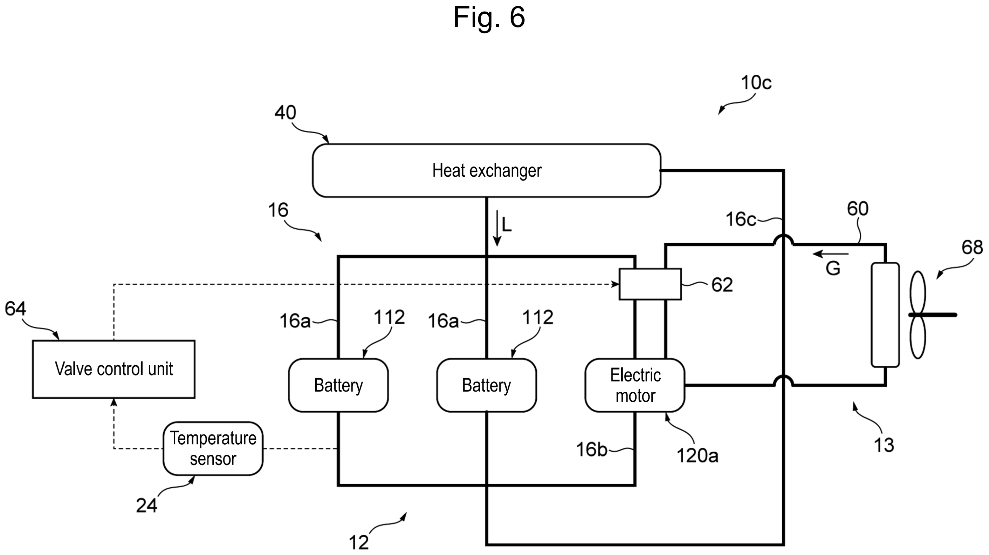

FIG. 6 is a schematic configuration diagram showing the temperature management device 10c according to the fourth embodiment. In FIG. 6, the description of the water pump 14, electric heater 18, temperature control unit 56, temperature sensor 24, and expansion tank 22 in the liquid circulation device 12 is omitted.

The electric motor 120a for the hydraulic pump according to this embodiment has a structure that allows selection between air cooling and water cooling. The temperature management device 10c includes a gas circulation device 13 in addition to the liquid circulation device 12. The gas circulation device 13 has a gas pipe 60 through which air (gas) for heat exchange circulates, and a radiator 68 that cools the gas flowing through the gas pipe 60.

The housing of the electric motor 120a for the hydraulic pump is placed with a gas flow path through which air flows and a liquid flow path through which cooling water flows. The gas flow path is connected to the gas pipe 60, and the liquid flow path is connected to the second pipe 16b of the liquid pipe 16. The electric motor 120a for the hydraulic pump is cooled by the air flowing into the gas flow path of the housing and by the cooling water flowing into the liquid flow path of the housing.

An on-off valve 62 for opening and closing the liquid pipe 16 and the gas pipe 60 is attached in the middle of the flow path of the second pipe 16b of the liquid pipe 16 and the middle of the flow path of the gas pipe 60. The on-off valve 62 is controlled by the valve control unit 64. The valve control unit 64 controls the on-off valve 62 according to the cooling water temperature detected by the temperature sensor 24. The valve control unit 64 is configured, for example, within the same control device as the temperature control unit 56.

If the cooling water temperature falls below the lower limit of the second management temperature range (the management temperature range of the battery 112), the valve control unit 64 controls the on-off valve 62 to open the gas pipe 60 and close the second pipe 16b. This suppresses the supply of cooling water heated by the electric heater 18 to the second pipe 16b and actively supplies more cooling water to the first pipe 16a. And, the electric motor 120a for the hydraulic pump is cooled by the air within the gas pipe 60 and the temperature of the battery 112 is properly managed (heated). Then, the operation of the battery 112 becomes stable, and failures of the battery 112 can be prevented.

If the cooling water temperature exceeds the upper limit of the second management temperature range (the management temperature range of the battery 112), the valve control unit 64 controls the on-off valve 62 to open the gas pipe 60 and close the second pipe 16b. Therefore, cooling water with a higher heat exchange efficiency than air is actively supplied to the first pipe 16a, and the battery 112 is cooled. And, the electric motor 120a for the hydraulic pump is cooled by the air in the gas pipe 60, and the temperature of the battery 112 is properly managed (cooled). Then, the operation of the battery 112 becomes stable, and failures of the battery 112 can be prevented.

If the cooling water temperature is within the second management temperature range (the management temperature range of the battery 112), the valve control unit 64 may control the on-off valve 62 to close the gas pipe 60 and open the second pipe 16b. This allows the temperature of the electric motor 120a for the hydraulic pump to be stably maintained within the management temperature range of the battery 112 (the first management temperature range).

### <Fifth Embodiment>

Next, the temperature management device 10d according to the fifth embodiment will be described.

The temperature management device 10d according to the fifth embodiment differs from the temperature management device 10 according to the first embodiment in the configuration of the heat exchanger 90 and the liquid circulation device 12d. Hereinafter, configurations having the same or similar functions as the temperature management device 10 according to the first embodiment will be denoted by the same reference numerals and their descriptions will be omitted, and different parts will be described.

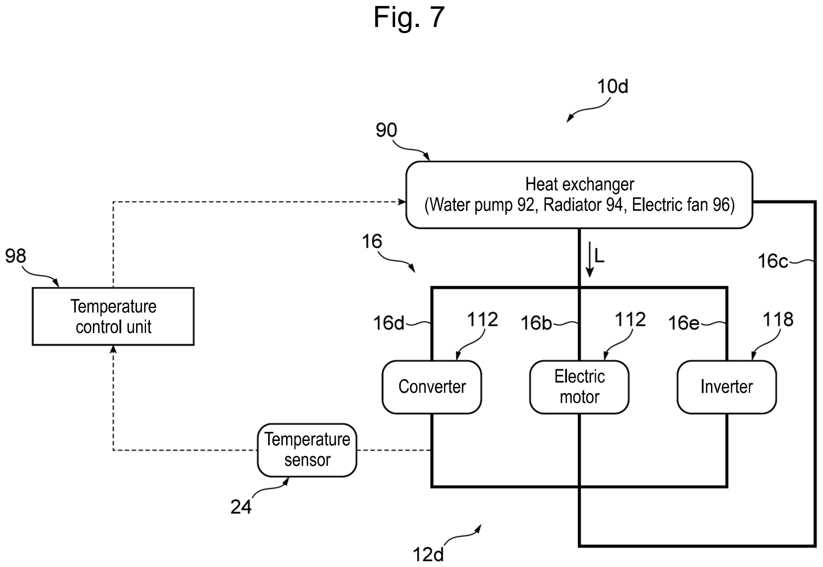

FIG. 7 is a schematic configuration diagram showing the temperature management device 10d according to the fifth embodiment. In FIG. 7, the description of the water pump 14, electric heater 18, and expansion tank 22 is omitted in the liquid circulation device 12d.

In this embodiment, the power supply device 110 includes auxiliary equipment other than the battery 112. The auxiliary equipment includes, for example, a DC/DC converter (third electrical device) 114 and an inverter 118 (fourth electrical device). The management temperature range (third management temperature range) of the DC/DC converter 114 and inverter 118 is the same as the management temperature range (first management temperature range) of the electric motor 120 for the hydraulic pump.

The temperature management device 10d according to the fifth embodiment includes a liquid circulation device 12d, a heat exchanger 90, and a temperature control unit 98.

The liquid pipe 16 of the liquid circulation device 12d includes a fourth pipe 16d where the DC/DC converter 114 is arranged, a fifth pipe 16e where the inverter 118 is arranged, and a second pipe 16b where the electric motor 120 for the hydraulic pump is arranged. And, the liquid pipe 16 includes a third pipe 16c (where a water pump is arranged) connected to the fourth pipe 16d, the fifth pipe 16e, and the second pipe 16b.

The heat exchanger 90 includes a water pump 92, a radiator 94, and an electric fan 96. In the heat exchanger 90, the water pumped into the pipe by the water pump 92 exchanges heat with the cooling water circulating in the liquid circulation device 12d. The water pumped into the pipe by the water pump 92 exchanges heat with the air supplied by the electric fan 96 in the radiator 94 and is cooled.

The temperature management device 10d also includes a temperature sensor 24 (installed in the liquid pipe 16) that detects the temperature of the cooling water. The temperature control unit 98 controls the heat exchanger 90 (for example, the electric fan 96) to lower the cooling water temperature within the third management temperature range if the cooling water temperature detected by the temperature sensor 24 exceeds the upper limit of the third management temperature range.

In this way, since the temperature control unit 98 controls the cooling water temperature to be maintained within the management temperature range (third management temperature range) of the DC/DC converter 114 and inverter 118, the temperature of the electric motor 120 for the hydraulic pump is inevitably maintained within the management temperature range of the electric motor. Therefore, there is no need to prepare a dedicated temperature management device for cooling the electric motor 120 for the hydraulic pump. As a result, it is possible to secure the installation space for equipment in the dump truck 100.

While the preferred embodiments of the present invention have been described above, the present invention is not limited to the temperature management devices 10, 10a, 10b, 10c, and 10d according to the above embodiments, and includes all aspects within the concept and scope of the claims of the present invention. For example, the above-described embodiments apply the present invention to the dump truck 100 as an electric working machine, but the application of the present invention is not limited to this and can also be applied to electric working machines other than the dump truck 100, such as electric excavators. In the above embodiment, the case where the circulating liquid of the liquid circulation device is water has been described, but as an example, the liquid may be oil.

Also, the above-described embodiments have been described in detail to clearly explain the present invention, but do not necessarily have to include all the configurations described. Furthermore, the configurations may be selectively combined as appropriate to achieve the aforementioned problems and effects. For example, the shape, material, arrangement, size, etc., of each component in the above embodiments can be appropriately changed according to the specific aspects of the present invention.

### Reference Signs List

10,10a,10b,10c,10d: temperature management device, 14: water pump (pump), 16: liquid pipe, 16a: first pipe, 16b: second pipe, 16c: third pipe, 16d: fourth pipe, 18: electric heater (heating part), 24: temperature sensor, 26: orifice (flow adjustment part), 28: relief valve, 40,90: heat exchanger, 56,98: temperature control unit (control device), 60: gas pipe, 62: on-off valve, 64: valve control unit, 100: dump truck (electric work machine), 110: power supply device, 112: battery, 114: DC/DC converter (auxiliary), 118: inverter (auxiliary), 120: electric motor for hydraulic pump (electric motor), 122: hydraulic pump, 130: actuator, L: direction of liquid flow

## Claims

1. A temperature management device configured to be mounted on an electric working machine having a battery and working by using the battery as a power source, and configured to manage the temperature of multiple electrical devices of the electric working machine,
wherein the temperature management device comprises:
a pump for pressurizing the liquid for heat exchange;
a liquid pipe through which the liquid pressurized by the pump circulates;
a heat exchanger configured to exchange heat between the refrigerant and the liquid by circulating the refrigerant for heat exchange; and
a temperature sensor configured to detect the temperature of the liquid, and a control device that controls the heat exchanger based on the temperature of the liquid detected by the temperature sensor,
wherein the liquid pipe includes a first pipe connected to a first electrical device among the multiple electrical devices, a second pipe connected to a second electrical device among the multiple electrical devices, and a third pipe supplying the liquid to the first and second pipes,
the control device stores a first management temperature range preset as the temperature for operating the first electrical device, and a second management temperature range preset as a narrower range than the first management temperature range for operating the second electrical device,
the control device lowers the temperature of the liquid to within the second management temperature range by controlling the heat exchanger when the temperature of the liquid detected by the temperature sensor exceeds the upper limit of the second management temperature range.

2. The temperature management device according to claim 1,
wherein the first pipe and the second pipe branch from the third pipe and are arranged in parallel to each other, and
a flow rate adjustment unit is installed on the second pipe, which is located upstream in the direction of liquid flow relative to the second electrical device, to adjust the amount of liquid flowing through the second pipe.

3. The temperature management device according to claim 1,
wherein the first pipe and the second pipe are arranged in series in the order of the first pipe and the second pipe at a position downstream in the flow direction of the liquid in the third pipe, and
a relief valve is installed in the second pipe at a position upstream in the flow direction of the liquid relative to the second electrical device.

4. The temperature management device according to claim 1,
wherein the third pipe includes a heating section for heating the liquid, and
the control device raises the temperature of the liquid to within the second management temperature range by controlling the heating unit when the temperature of the liquid detected by the temperature sensor falls below the lower limit of the second management temperature range.

5. The temperature management device according to claim 1,
wherein the temperature management device includes a gas pipe through which the gas that has exchanged heat with the second electrical equipment circulates, and an on-off valve that opens and closes the second pipe and the gas pipe, and
the control device opens the gas pipe and closes the second pipe by controlling the on-off valve when the temperature of the liquid, as detected by the temperature sensor, falls below the lower limit of the second management temperature range or exceeds the upper limit of the second management temperature range.

6. The temperature management device according to claim 1,
wherein the liquid pipe includes a fourth pipe connected to a third electrical device among the multiple electrical devices, and a fifth pipe connected to a fourth electrical device among the multiple electrical devices,
the fourth pipe and the fifth pipe branch from the third pipe and are arranged in parallel to the first pipe,
the control device stores a third management temperature range having the same temperature range as the first management temperature range for operating the third and fourth electrical devices,
the control device lowers the temperature of the liquid within the third management temperature range by controlling the heat exchanger when the temperature of the liquid detected by the temperature sensor exceeds the upper limit of the third management temperature range.

7. A dump truck comprising multiple electrical devices including a battery, and operates and travels using the battery as a power source,
wherein the dump truck comprises
a temperature management device configured to manage the temperature of the multiple electrical devices, and the temperature management device includes:
a pump for pressurizing the liquid for heat exchange;
a liquid pipe through which the liquid pressurized by the pump circulates;
a heat exchanger that exchanges heat between the refrigerant and the liquid by circulating the refrigerant for heat exchange; and
a temperature sensor that detects the temperature of the liquid, and a control device that controls the heat exchanger based on the temperature of the liquid detected by the temperature sensor, and
the liquid pipe includes a first pipe connected to a first electrical device among the multiple electrical devices, a second pipe connected to a second electrical device among the multiple electrical devices, and a third pipe supplying the liquid to the first and second pipes,
the control device stores a first management temperature range preset as the temperature for operating the first electrical device, and a second management temperature range preset as a narrower range than the first management temperature range for operating the second electrical device, and
the control device lowers the temperature of the liquid to within the second management temperature range by controlling the heat exchanger when the temperature of the liquid detected by the temperature sensor exceeds the upper limit of the second management temperature range.
